Europäisches Patentamt

(19) European Patent Office

Office européen des brevets

(11) Publication number: **0 018 227**
**B1**

# (12) EUROPEAN PATENT SPECIFICATION

(45) Date of publication of patent specification: **04.05.83**

(51) Int. Cl.³: **B 60 T 13/22**

(21) Application number: **80301275.6**

(22) Date of filing: **21.04.80**

(54) Tractor/trailer braking systems with spring brake emergency braking and parking.

(30) Priority: **19.04.79 GB 7913598**

(43) Date of publication of application:
**29.10.80 Bulletin 80/22**

(45) Publication of the grant of the patent:
**04.05.83 Bulletin 83/18**

(84) Designated Contracting States:
**DE FR GB IT SE**

(56) References cited:
**DE - B - 1 274 903**
**DE - B - 2 051 004**
**DE - B - 2 243 472**

(73) Proprietor: **CLAYTON DEWANDRE COMPANY LIMITED**
**P.O. Box 9 Titanic Works**
**Lincoln, LN5 7JL (GB)**

(72) Inventor: **Page, Wilbur Mills**
**48 Jensen Road**
**Bracebridge Heath Lincoln (GB)**

(74) Representative: **Hartley, David et al,**
**c/o Withers & Rogers 4 Dyer's Buildings Holborn**
**London, EC1N 2JT (GB)**

Courier Press, Leamington Spa, England.

Tractor/Trailer braking systems with spring brake emergency
braking and parking

This invention relates to full power closed centre hydraulic braking systems for automotive vehicle trailer combinations and especially tractor/semi-trailer combinations.

One kind of system which has been proposed includes both service and emergency line connections between the tractor and the trailer, each with its associated return line, the emergency line providing a constant supply of hydraulic fluid from the vehicle through a relay valve on the trailer to a trailer-mounted storage unit or accumulator, and a service line which when activated by the foot or hand control on the tractor, actuates the relay valve to deliver pressure fluid from the accumulator to the trailer service brakes.

Although full power hydraulic braking systems have been used for some considerable time on rigid vehicles, both private and commercial, the system has not been widely used for road articulated combinations. This is for several reasons not least among which is the problem of connecting and disconnecting the two systems, the inclusion of return lines (which are not required on air systems) and the ability of the system to take care of internal leaks without pressurising the return lines and thence the coupling interface on the trailer when it is disconnected from the tractor. The greatest inhibiting factor, however, which is fundamental to all hydraulic systems that the reservoir fluid volume is limited. Air systems on the other hand have unlimited atmosphere to draw on and for example a single energy source (compressor) can pump against multi system protection valves thus ensuring continual charging of an unfailed circuit. This "overflow" technique cannot be applied to hydraulics and a serious system leak on the trailer could empty the tractor fluid reservoir in a few minutes, leaving only limited stored energy for braking. However, in order to overcome this deficiency the tractor system could be fitted with a triple element pump, that is one element for each of the tractor axles (or circuits) and the third element for the trailer.

This invention arose during design of a trailer system which can be coupled to such a trailer system or to a conventional power system embodying a dual storage reservoir dual hydraulic pump, dual brake valve which applies the front and rear brakes of the tractor as separate circuits and a pressure storage circuit for the parking brake which may be energised via a non-return valve by the pump element supplying the front axle circuit whilst the rear axle brake circuit together with pressure storage for the relay valves controlling the trailer brakes can be energised by the second element of the pump.

When the tractor brakes are applied, trigger lines from the two axle circuits are simultaneously pressurised to operate a dual relay valve in a modulated manner to operate the trailer brakes.

In the case of an accidental parting of any tractor and trailer in service the trailer brakes must be applied automatically this being triggered by either the disruption of the emergency (supply) line between tractor and trailer or by a disconnection of the emergency coupling. It is also desirable for the tractor system to be arranged such that a failure in the parking circuit energy source destroys pressure in the trailer emergency line thus applying the trailer brakes.

It is an object of this invention to provide secondary or residual braking in full power hydraulic trailer braking systems.

According to this invention we propose a full power braking system for a vehicle trailer combination, of the kind referred to and which comprises spring brake actuators connected to the accumulator via a second relay valve which is triggered by fluid pressure on the emergency line. Preferably, the relay valve is triggered via a park valve which is open except when set to a 'park' position.

In a preferred embodiment, the relay valve is a dual relay valve also triggered by a manoeuvre valve when temporary re-energisation of the spring brake actuators is required to brake release for example, when the towing vehicle and trailer are uncoupled. In the event that the trailer accumulator is discharged, release of the spring brakes would only be possible by means of a wind-off mechanism.

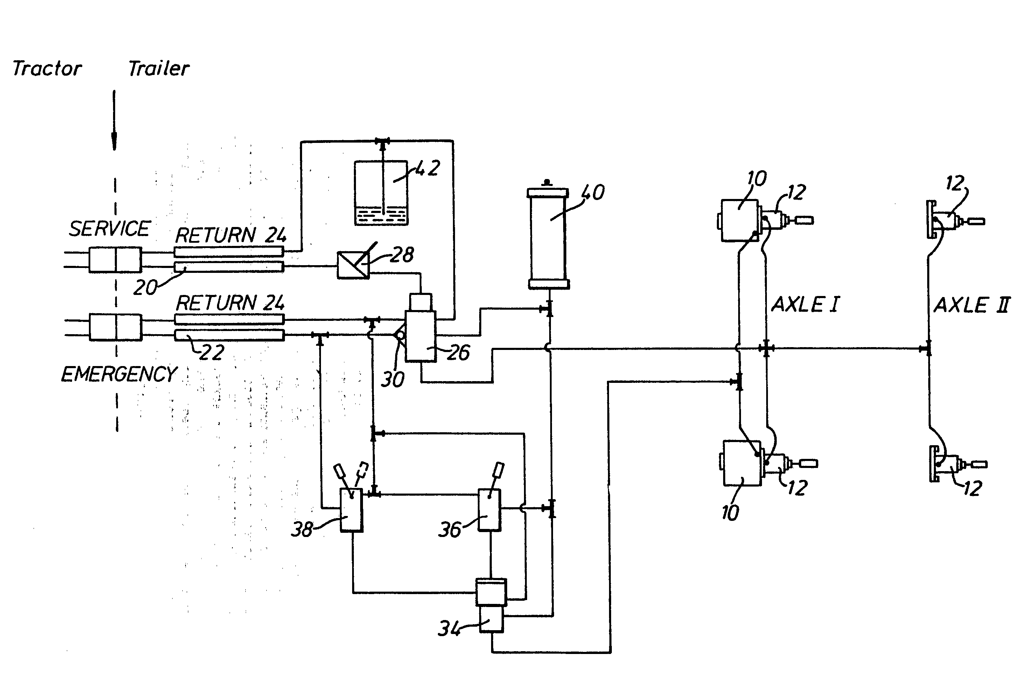

A preferred embodiment of this invention is shown in the accompanying drawing which is a diagram of a two line trailer full power hydraulic braking system supplying service brake actuators 12 on axles I and II of a trailer. Axle I is additionally fitted with spring brake actuators 10 which are held "off" by a dual relay valve triggered by the fluid pressure on the emergency line as described below.

The system illustrated has a four line coupling with the trailer, including a service control line 20 and an emergency line 22 each with their associated return lines 24. The service brakes are controlled by a simple relay valve 26 triggered by the service line pressure in turn modulated by a load sensing valve 28 connected to the emergency line 22 via a non-return valve 30 at the inlet port. The spring brake actuators are controlled by a second relay valve 34 responsive to a manoeuvre valve 36 and the emergency line pressure via a normally open park valve 38, and supplied with motive fluid by a trailer system accumulator 40. The first relay valve 26 exhausts via an expansion chamber 42 to the service control return line 24.

This system differs fundamentally from the system with reserve spring braking and parking described in our copending European Patent Application EP—A—0018228 in that the spring brakes are used for emergency braking and are thus held in the "off" position when the emergency line 22 is energised, the pressure on this line acting as a trigger via the normally open park valve 38 onto the dual relay valve 34 supplied by the trailer accumulator.

The manoeuvre valve 36 is connected so as also to trigger the dual relay valve 34 when temporary re-energising of the spring brake actuators is required to release the brakes. Should it be necessary to move a trailer with a discharged accumulator, the spring brakes would have to be wound-off as a temporary measure.

Although the trailer goes automatically into "emergency" when disconnected from the tractor, the park valve should be set to the park position to ensure that the spring brakes remain applied when the trailer is recoupled.

Parking the trailer when coupled to a tractor is executed simply by moving the lever to "Park" thus exhausting the spring brake chambers to the expansion chamber 42.

Our European Patent Application EP—A—0018229, describes a tractor/trailer braking system with residual (secondary) braking.

## Claims

1. A full power closed centre hydraulic braking system for a vehicle trailer combination, comprising service and emergency line connections (20, 22) between the vehicle and the trailer each with its associated return line (24), the emergency line (22) providing a constant supply of hydraulic fluid from the vehicle through a relay valve (26) on the trailer, to a trailer mounted storage unit or accumulator, and a service line which when activated by a control of the tractor actuates the relay valve (26) to deliver pressure fluid from the accumulator to the trailer service brake actuators, characterised in that the system further comprises spring brake actuators (10) connected to the accumulator (40) so as to be held off by pressure fluid from the accumulator, via a second relay valve (34) which is triggered by fluid pressure on the emergency line (22).

2. A braking system according to claim 1 wherein the second relay valve (34) is triggered via a park valve (36) which is open except when set to a "park" position, wherein the spring brake actuators (10) are exhausted to apply the brakes.

3. A braking system according to claim 2 wherein the second relay valve (34) is a dual relay valve triggered by the emergency line (22) pressure via the park valve (38) and also by a manoeuvre valve (36) when temporary re-energisation of the brake actuators (10) is required to release the brakes.

## Patentansprüche

1. Hydraulisches mit konstantem Druck arbeitendes Bremssystem für eine Fahrzeug-An-hänger-Kombination mit Betriebs- und Notleitungsverbindungen (20, 22) zwischen dem Fahrzeug und dem Anhanger mit jeweils zugeordneter Rücklaufleitung (24), wobei die Notleitung (22) für eine konstante Hydraulikfluidzufuhr von Fahrzeug über ein Steuerventil (26) am Anhänger zu einer Speichereinheit oder zu einem Speicher sorgt, der am Anhänger angebracht ist, und wobei eine Betriebsleitung bei Betätigung durch eine Steuerung am Zugfahrzeug das Steuerventil (26) so betätigt, daß Druckfluid aus dem Speicher zu den Betätigungseinrichtungen der Betriebsbremsen des Anhängers geliefert wird, dadurch gekennzeichnet, daß das System weiterhin Federspeicher-Bremsbetätigungseinrichtungen (10) aufweist, die mit dem Speicher (40) über ein zweites Steuerventil (34) so verbunden sind, daß sie durch das Druckfluid aus dem Speicher weggehalten werden, wobei das zweite Steuerventil (34) durch Fluiddruck in der Notleitung (22) geschaltet wird.

2. Bremssystem nach Anspruch 1, bei welchem das zweite Steuerventil (34) über ein Parkventil (36) geschaltet wird, das ausgenomment in der Einstellung auf eine "Parkposition" offen ist, wobei die Federspeicher-Bremsbetätigungseinrichtungen (10) zum Anlegen der Bremsen entleert werden.

3. Bremssystem nach Anspruch 2, bei welchem das zweite Steuerventil (34) ein Doppelsteuerventil ist, das von dem Druck in der Notleitung (22) über das Parkventil (38) sowie auch durch ein Stellventil (36) geschaltet wird, wenn eine vorübergehende Neuaktivierung der Bremsbetätigungseinrichtungen (10) erforderlich ist, um die Bremsen freizugeben.

## Revendications

1. Un système de freinage à pleine puissance hydraulique à centre fermé pour une combinaison véhicule/remorque comprenant des conduites de connexion (20, 22) de service et de secours entre le véhicule et la remorque, chacune comprenant sa donduite de retour associée (24), la conduite de secours (22) assurant une alimentation constante de fluide hydraulique provenant du véhicule à travers une soupape relais (26) sur la remorque vers un accumulateur ou une unité de stockage montée sur la remorque, et une conduite de service qui lorsqu'elle est actionnée par une commande sur le tracteur actionne la soupape relais (26) de façon à délivrer du fluide sous pression provenant de l'accumulateur vers les organes d'actionnement du frein de service de la remorque, caractérisé en ce que le système comprend en outre des organes d'actionnement (10) de frein à ressort connectés à l'accumulateur (40) de manière qu'ils soient maintenus hors d'action par le fluide sous pression provenant de l'accumulateur par l'intermédiaire d'une seconde soupape relais (34) laquelle est déclenchée par la pression de fluide régnant dans la conduite de secours (22).

2. Système de freinage selon la revendication 1, dans lequel la seconde soupape relais (34) est déclenchée par l'intermédiaire d'une soupape de parking (36) laquelle est ouverte sauf lorsqu'elle est placée en position "parking" dans laquelle les organes d'actionnement (10) de frein à ressort sont déchargés pour appliquer les freins.

3. Un système de freinage selon la revendication 2 dans lequel la seconde soupape relais (34) est une soupape relais double déclenchée par la pression de la conduite de secours (22) à travers la soupape de parking (38) et également par une soupape de manoeuvre (36) lorsqu'une réalimentation temporaire des organes d'actionnement (10) de frein est requise par relacher les freins.